# EUROPÄISCHE PATENTSCHRIFT

(11) **EP 1 649 587 B1**
(45) Veröffentlichungstag und Bekanntmachung des Hinweises auf die Patenterteilung: **23.06.2010**
(21) Anmeldenummer: 04762436.6
(22) Anmeldetag: 21.07.2004
(51) Int. Cl.: H02M 3/07

(54) **SCHALTUNGSANORDNUNG ZUR SPANNUNGSREGELUNG UND VERFAHREN ZUM BETREIBEN EINER SCHALTUNGSANORDNUNG ZUR SPANNUNGSREGELUNG**
CIRCUIT ARRANGEMENT FOR VOLTAGE ADJUSTMENT AND METHOD FOR OPERATING A CIRCUIT ARRANGEMENT FOR VOLTAGE ADJUSTMENT
ENSEMBLE CIRCUIT DE REGULATION DE TENSION ET PROCEDE PERMETTANT DE FAIRE FONCTIONNER LEDIT CIRCUIT

(30) Priorität: 25.07.2003 DE 10334066
(43) Veröffentlichungstag der Anmeldung: 26.04.2006
(73) Patentinhaber: Infineon Technologies AG, 85579 Neubiberg (DE)
(72) Erfinder: HAIDER, Günter, A-4040 Linz (AT); MAYERL, Christoph, 80469 München (DE); NEBEL, Gerhard, 87509 Immenstadt (DE); SAN SEBASTIAN, Iker, 20005 San Sebastian (ES); SEDLAK, Holger, 82054 Sauerlach (DE); WEDER, Uwe, 84072 Au/Hallertau (DE)
(74) Vertreter: Viering, Jentschura & Partner
(86) Internationale Anmeldenummer: PCT/DE2004/001586
(87) Internationale Veröffentlichungsnummer: WO 2005/013466

(56) Entgegenhaltungen:
- EP-A- 0 470 498
- WO-A-01/71894
- GB-A- 2 339 638

## Beschreibung

### Technisches Gebiet

Die Erfindung betrifft eine Schaltungsanordnung zur Spannungsregelung und ein Verfahren zum Betreiben der Schaltungsanordnung. Die Schaltungsanordnung umfasst dabei einen Längsregler.

### Stand der Technik

Heute sind in der Regel die chipinternen Betriebsspannungen kleiner als die von außen an den Chip angelegte Spannung. Zur Reduzierung der externen Spannung sind deshalb auf dem Chip integrierte Spannungsregler erforderlich. Diese können beispielsweise auf einer N-Kanal-MOS Technologie beruhen. Um die Spannung am Gate des als N-MOS Transistor ausgeführten Ausgangstransistors des Spannungsreglers ausreichend erhöhen zu können, weisen derartige Längsregler zudem eine Ladungspumpe auf. Gegenüber einem P-MOS Transistor bietet ein N-MOS Transistor als Ausgangstransistor vorteilhafter Weise eine bessere Eingangsspannungsunterdrückung und eine geringere Empfindlichkeit bei Lastschwankungen. Derartige Spannungsregler können beispielsweise als 3-Punkt Regler ausgebildet sein, wobei die Spannung am Ausgang des Spannungsreglers allerdings eine gewisse Welligkeit aufweist. Mit Hilfe eines kontinuierlichen Reglers kann diese Welligkeit jedoch reduziert und damit die Spannungsregelung verbessert werden. Grundsätzlich sind solche Schaltungen, die auch unter der Bezeichnung low drop Spannungsregler bekannt sind, für einen besonders geringen Spannungsabfall zwischen Ein- und Ausgang ausgelegt. Aus diesem Grund ist allerdings nachteilhafterweise ein selbständiges Anlaufen des Spannungsreglers nicht möglich.

Das Problem des Spannungsreglers wurde bisher mit einem P-MOS Ausgangstransistor gelöst, dessen Unterdrückung der Eingangsspannung und dessen Lastverhalten jedoch nicht den Anforderungen gerecht wird. Außerdem sind die hohen Einschaltspannungsspitzen bei den heutigen Technologien nicht mehr tolerierbar.

In der GB 2 339 638 A, die als nächstliegender Stand der Technik angesehen werden kann, ist eine Schaltungsanordnung zur Spannungsreglung mit einem Längsregler und einer Ladungspumpe beschrieben, wobei Längsregler und Ladungspumpe mittels einer Starteinheit mit Spannung versorgt werden.

### Darstellung der Erfindung

Eine Aufgabe der Erfindung ist es, eine Schaltungsanordnung zur Spannungsregelung sowie ein Verfahren zum Betreiben der Schaltungsanordnung zur Spannungsreglung anzugeben, bei der bzw. bei dem sichergestellt ist, dass der Spannungsregler jederzeit anläuft.

Ein Vorteil der Erfindung besteht darin, dass die Schaltungsanordnung lediglich einen geringen Spannungsabfall zwischen Eingangs- und Ausgangsspannung und eine hohe Eingangsspannungsunterdrückung aufweist.

Vorteilhafterweise ist der Stromverbrauch bei der vorgeschlagenen Schaltungsanordnung äußerst gering.

Die Aufgabe wird durch eine Schaltungsanordnung zur Spannungsregelung mit den Merkmalen gemäß Patentanspruch 1 sowie durch ein Verfahren zum Betreiben eines Spannungsreglers mit den Merkmalen gemäß Patentanspruch 14 gelöst

Die erfindungsgemäße Schaltungsanordnung zur Spannungsregelung weist einen Längsregler mit einem Regelverstärker und einer diesem nachgeschalteten Ladungspumpe auf. Zudem weist die Schaltungsanordnung eine Referenzspannungseinheit zur Erzeugung einer Referenzspannung für den Regelverstärker und eine Startereinheit zur Erzeugung einer Starterspannung auf, um den Regelverstärker, die Ladungspumpe und die Referenzspannungseinheit während des Startens des Längsreglers mit Spannung zu versorgen. Die Ladungspumpe wird bei Abgabe des Steuersignals durch ein vom Steuersignal gesteuertes Schaltmittel von der Referenzspannungseinheit und der Startereinheit getrennt, wodurch die Zufuhr der Starterspannung zur Ladungspumpe unterbunden ist.

Bei dem erfindungsgemäßen Verfahren zum Betreiben eines Spannungsreglers, welcher einen Längsregler umfast, der wiederum einen Regelverstärker und eine diesem nachgeschaltete Ladungspumpe aufweist, werden während einer Startphase der Regelverstärker und die Ladungspumpe mit einer von einer Startereinheit erzeugten Starterspannung versorgt. Nachdem die Startphase beendet ist, wird in eine normale Betriebsphase umgeschaltet, indem mittels einer Umschalteinheit der Regelverstärker und die Ladungspumpe von der Starterspannung der Startereinheit abgeklemmt und mit einer vom Längsregler erzeugten Ausgangsspannung verbunden werden.

Vorteilhafte Weiterbildungen der Erfindung ergeben sich aus den in den abhängigen Patenansprüchen angegebenen Merkmalen.

Bei einer Ausführungsform der erfindungsgemäßen Schaltungsanordnung weist der Längsregler als Längsreglertransistor einen N-MOS Transistor auf. Damit lässt sich vorteilhafterweise eine hohe Eingangsspannungsunterdrückung bewerkstelligen.

Bei einer weiteren Ausführungsform der erfindungsgemäßen Schaltungsanordnung ist ein steuerbares Schaltmittel vorgesehen, über das die Ladungspumpe mit der Starterspannung oder mit einer vom Längsregler erzeugten Ausgangsspannung verbindbar ist.

Bei einer zusätzlichen Ausführungsform der erfindungsgemäßen Schaltungsanordnung ist ein weiterer Längsregler vorgesehen, dessen Anschlüsse für die Versorgungsspannung ebenfalls mit der Startereinheit verbindbar sind. Mit Hilfe der beiden Längsregler können somit verschiedene Schaltungsteile eines integrierten Bausteins, beispielsweise ein digitaler und ein analoger Schaltungsteil, mit getrennten Spannungen versorgt werden. Dadurch wird eine Entkoppelung der Versorgungsspannungen erreicht, was wiederum zur Folge hat, dass die Versorgungsspannung für den einen Schaltungsteil unabhängig von Lastschwankungen im anderen Schaltungsteil wird.

Vorteilhafter Weise weist die erfindungsgemäße Schaltungsanordnung ein zweites steuerbares Schaltmittel auf, über das der Regelverstärker mit einer vom weiteren Längsregler erzeugten Ausgangsspannung verbindbar ist. Diese Ausführungsform ist insbesondere dann von Vorteil, wenn der eine Längsregler mit einer geringen Last und der weitere Längsregler mit einer großen oder stark schwankenden Last verbunden ist. Bei der vorgeschlagenen Art der Verschaltung bleiben Lastschwankungen am Ausgang des ersten Längsreglers ohne Folgen, weil die Spannungsversorgung des Regelverstärkers des ersten Längsreglers nicht mit Hilfe der weniger stabilen Ausgangsspannung des ersten Längsreglers sondern mit der stabilen Ausgangsspannung des weiteren, geringer belasteten Längsreglers erfolgt.

Zudem ist es von Vorteil, wenn bei der erfindungsgemäßen Schaltungsanordnung die Referenzspannungseinheit als Bandgap-Schaltung ausgebildet ist.

Darüber hinaus können bei der erfindungsgemäßen Schaltungsanordnung der Längsregler und/oder der weitere Längsregler als low drop Spannungsregler ausgebildet sein.

Zur Lösung der Aufgabe wird ferner vorgeschlagen, dass die Startereinheit der erfindungsgemäßen Schaltungsanordnung einen Zweipunktregler aufweist.

Der Zweipunktregler der erfindungsgemäßen Schaltungsanordnung kann eingangsseitig einen Spannungsteiler mit einem Widerstand und einer Diode aufweisen, wobei über den Spannungsteiler der Schaltpunkt des Zweipunktreglers einstellbar ist.

Bei einer Weiterbildung der erfindungsgemäßen Schaltungsanordnung weist der Zweipunktregler einen mit dem Spannungsteiler verbundenen Inverter mit einem N-MOS Transistor und einem P-MOS Transistor auf.

Nach einem weiteren Merkmal der Erfindung kann bei der Schaltungsanordnung zur Spannungsregelung der Schaltpunkt des Zweipunktreglers über die Kanallänge und Kanalbreite der zwei MOS Transistoren einstellgestellt werden.

Bei einer weiteren Ausführungsform der Erfindung weist die Startereinheit der Schaltungsanordnung eine Deaktivierungskomponente auf, über welche die Startereinheit deaktivierbar ist.

Bei einer zusätzlichen Ausführungsform der Erfindung erfolgt die Steuerung der Deaktivierungskomponente über die Referenzspannungseinheit.

Die erfindungsgemäße Schaltungsanordnung ist vorteilhafter weise in einem integrierten Controllerbaustein verwendbar.

Bei einer Weiterbildung des erfindungsgemäßen Verfahrens wird mittels einer Referenzspannungseinheit die Starterspannung mit einer von der Referenzspannungseinheit erzeugten Referenzspannung verglichen und abhängig vom Ergebnis des Vergleichs die Umschalteinheit angesteuert.

Schließlich kann bei dem erfindungsgemäßen Verfahren die Startereinheit nach Beendigung der Startphase deaktiviert werden. Dadurch lassen sich in der Startereinheit vorhandene potenzielle Störquellen eliminieren.

### Kurze Beschreibung der Zeichnungen

Im Folgenden wird die Erfindung mit mehreren Ausführungsbeispielen anhand von zwei Figuren weiter erläutert.
- Figur 1: zeigt den prinzipiellen Aufbau einer möglichen Aus- führungsform des erfindungsgemäßen Spannungsreglers mit zwei Längsreglern und einer Startereinheit zur Erzeugung einer Starterspannung für die Längsregler.
- Figur 2: zeigt den Aufbau des Starters.

### Wege zur Ausführung der Erfindung

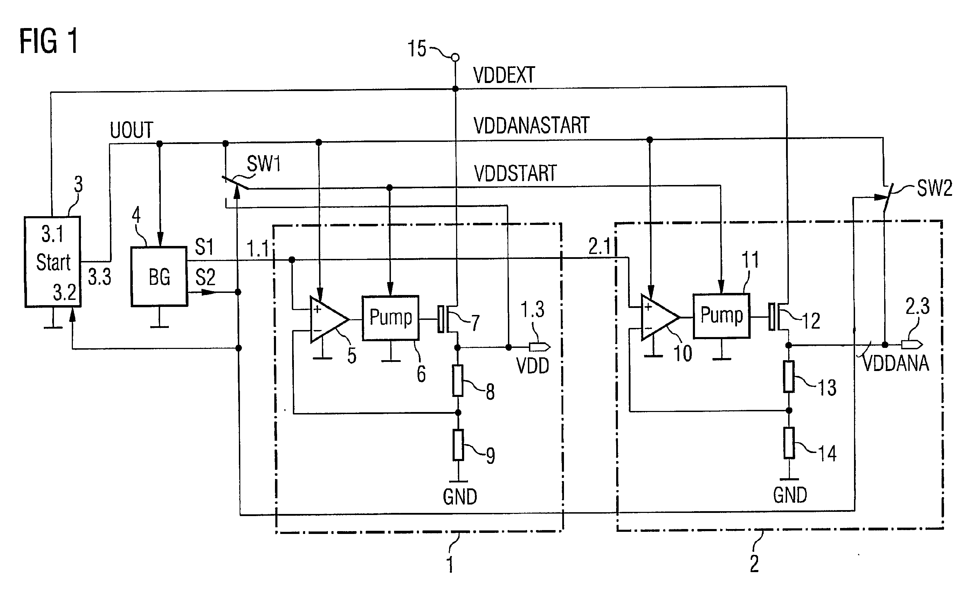

In Figur 1 ist der gesamte Spannungsregler in Form einer Blockschaltung dargestellt. Am Eingang 15 liegt die externe Versorgungsspannung VDDEXT an. An den beiden Ausgängen 1.3 und 2.3 der beiden Längsregler 1 bzw. 2 sind für digitale Komponenten die geregelte Ausgangsspannung VDD und für analoge Komponenten die geregelte Ausgangsspannung VDDANA abgreifbar. Der Längsregler 1 umfasst neben einem Regeloperationsverstärker 5 und einer diesem nachgeschalteten Ladungspumpe 6 einen von der Ladungspumpe 6 gesteuerten Längstransistor 7. Der Längstransistor 7 ist ausgangsseitig zwischen die externe Versorgungsspannung VDDEXT und einen aus zwei Widerständen 8 und 9 aufgebauten Spannungsteiler geschaltet. Eine vom Spannungsteiler erzeugte Teilspannung wird auf den invertierenden Eingang des Regeloperationsverstärkers 5 zurückgeführt. Der Aufbau des Längsreglers 2 entspricht prinzipiell dem des Längsreglers 1. Die Bandgap Referenzspannungsquelle 4 liefert eine Referenzspannung S1 und ein Power On Signal S2, welches auch als Steuersignal bezeichnet wird, etwa 60 µs nach dem Einschalten. Die Referenzspannung S1 wird auf den Eingang 1.1 Längsreglers 1 und damit auf den nicht invertierenden Eingang des Regeloperationsverstärkers 5 sowie auf den Eingang 2.1 Längsreglers 2 und damit auf den nicht invertierenden Eingang des Regeloperationsverstärkers 10 geführt.

Die Erfindung löst das Problem dadurch, dass die Starterschaltung 3 nicht den gesamten Spannungsreglerchip, sondern nur die zum Start erforderlichen Blöcke, nämlich die Bandgap Referenzschaltung 4, die Regeloperationsverstärker 5 und 10 sowie die Ladungspumpen 6 und 11 mit Spannung versorgt. Dadurch kann der für den Start in der Starterschaltung 3 vorhandene P-MOS Transistor P1 sehr klein gehalten werden, so dass parasitäre Kopplungen nach Abschalten der Starterschaltung 3 den Normalbetrieb nur wenig beeinflussen. Die Starterschaltung 3 besitzt keinen Regeloperationsverstärker, so dass auch ein Kompensationskondensator entfällt. Dadurch können unerwünschte Einschaltspitzen von der internen Spannung weitgehend fern gehalten werden. Außerdem ist die Starterschaltung 3 so aufgebaut, dass sie keine Referenzspannung benötigt, die beim Start der Längsregler 1 und 2 noch gar nicht stabil zur Verfügung steht.

Der Hauptvorteil der Erfindung besteht darin, dass die zu regelnden Ausgangsspannungen VDD und VDDANA nur über die großen N-MOS Transistoren 7 und 12 mit der externen Eingangsspannung VDDEXT verbunden sind.

Bei dem in Figur 1 gezeigten möglichen Anwendungsfall der erfindungsgemäßen Schaltungsanordnung für Chipkarten liefert der Spannungsregler zwei Ausgangsspannungen VDD und VDDANA. Dadurch kann die Versorgungsspannung VDDANA für empfindliche Analogschaltungen von der möglicherweise gestörten digitalen Ausgangsspannung VDD entkoppelt werden. Bei dieser Anwendung sind beide Ausgangsspannungen VDD und VDDANA auf den gleichen Sollwert S1 eingestellt.

Die N-MOS Transistoren 7 und 12 arbeiten als Sourcefolger mit einer wesentlich besseren Eingangsspannungsunterdrückung und einem besseren Lastverhalten als ein P-MOS Transistor. Da ein N-MOS Transistor Ladung auf seinem Gate benötigt, damit er leitend wird, kann ein N-MOS Regler nicht von selbst starten. Die Starterschaltung 3 ist mit einem P-MOS Transistor aufgebaut. In der Erfindung versorgt die Starterschaltung 3 aber nur die Bandgap Referenzschaltung 4, die beiden Regeloperationsverstärker 5 und 10 sowie die beiden Ladungspumpen 6 und 11. Dadurch kann der P-MOS Transistor P1 der Starterschaltung klein gehalten und beim Wechsel vom Starterbetrieb in den Normalbetrieb komplett abgeschaltet werden, so dass unerwünschte Einkopplungen von der externen Betriebsspannung VDDEXT auf ein Minimum reduziert werden. Die Starterschaltung 3, ist im Prinzip eine Art P-MOS Regler, nur dass diese keinen Regeloperationsverstärker benötigt. Die Kompensation eines solchen Verstärkers hat bei P-MOS Reglern immer zu problematischen Einschaltspannungsspitzen geführt. Die Starterschaltung 3 dieser Erfindung verwendet die Schaltschwelle des Inverters INV2 und arbeitet damit als 2-Punktregler. Ein solcher Regler ist schaltungstechnisch sehr einfach, benötigt keine Kompensation, arbeitet viel schneller als ein Regeloperationsverstärker und benötigt keine Referenzspannung, die beim Starten in der Regel noch nicht stabil zur Verfügung steht. Die Bandgap Referenzspannungsquelle 4 erzeugt das Power On Signal S2, das dazu dient die gesamte Schaltung vom Starterbetrieb in den Normalbetrieb umzuschalten. Im Normalbetrieb ist die Starterschaltung 3 komplett abgeschaltet und die Regeloperationsverstärker 7 und 10 werden aus der inzwischen hochgelaufenen Ausgangsspannung VDDANA des Längsreglers 2 und die Ladungspumpen 6 und 11 aus der inzwischen hochgelaufenen Ausgangsspannung VDD des Längsreglers 1 versorgt.

Zu Beginn, das heißt unmittelbar nach dem Einschalten der gesamten Schaltung, befinden sich die beiden Schalter SW1 und SW2 in der in Figur 1 gezeichneten Stellung, so dass die Bandgap Referenzschaltung 4, die Regeloperationsverstärker 5 und 10 und die Ladungspumpen 6 und 11 von der Starterschaltung 3 mit der Spannung UOUT versorgt werden. Sobald diese drei Komponenten versorgt werden, erkennen die Regeloperationsverstärker 5 und 10, dass die Ausgangspannungen VDD und VDDANA zu niedrig sind und aktivieren die Ladungspumpen 6 bzw. 11, die die Gates der N-MOS Transistoren 7 bzw. 12 speisen. Sobald die Einsatzspannungen dieser Transistoren überschritten werden, steigen auch die Ausgangsspannungen VDD und VDDANA an. Dabei ist es nahezu unbedeutend wie groß die Lasten an den Ausgängen 1.3 und 2.3 sind, da die N-MOS Transistoren 7 und 12 als Sourcefolger arbeiten. Die Lasten haben daher auch kaum einen Einfluss auf die benötigte Hochlaufzeit bis die Ausgangsspannungen VDD und VDDANA ihren Sollwert erreicht haben und die Regelschleifen einrasten. Wichtig ist nur, dass dies geschieht bevor das Power On Signal S2 in den Normalbetrieb umschaltet.

Zum Umschalten in den Normalbetrieb wechselt der Schalter SW1 seine Stellung und der Schalter SW2 schließt, das heißt wird leitend. Außerdem wird die Starterschaltung 3 deaktiviert. Über den Schalter SW1 werden jetzt die Ladungspumpen 6 und 11 von der Ausgangsspannung VDD und die Regeloperationsverstärker 5 und 10 sowie die Bandgap Referenzschaltung 4 von der Ausgangsspannung VDDANA versorgt. Die Starterschaltung 3 mit ihrer ungenauen Ausgangsspannung UOUT wird nun nicht mehr benötigt. Die Starterschaltung 3 wird jetzt über VDDANASTART rückwärts über den Ausgang 3.3 gespeist. Durch das Power On Signal S2 werden aber in der Starterschaltung 3 alle Pfade deaktiviert, so dass kein Rückwärtsstrom in die Starterschaltung 3 hinein fließt.

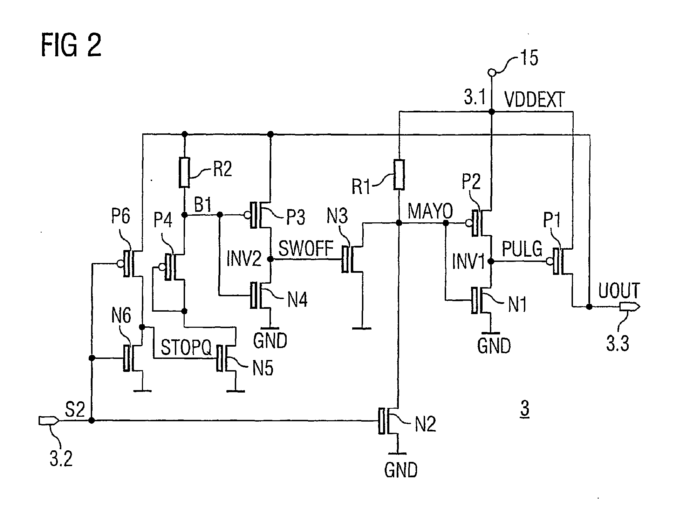

Die in Figur 1 als Block dargestellte Startereinheit 3 enthält die Starterschaltung, welche wie in Figur 2 dargestellt, ausgebildet sein kann und im Folgenden weiter erläutert wird. Nur die beiden P-MOS Transistoren P1 und P2 sowie der Widerstand R1 werden von der externen Spannung VDDEXT versorgt. Die Transistoren P1, P2, N1, N2 und N3 sind als Hochspannungstransistoren ausgeführt, da diese mit der externen Spannung VDDEXT belastet werden können. Alle anderen Transistoren sind Niederspannungstransistoren, da sie nur die geregelte Spannung UOUT sehen. Beim Einschalten sorgt der Widerstand R1 dafür, dass das Potential am Knoten MAYO hochgezogen wird. Der Inverter INV1, bestehend aus dem P-MOS Transistor P2 und dem N-MOS Transistor N1, liefert am Knoten PULG eine logische 0 und der Transistor P1 leitet. Jetzt steigt die Ausgangsspannung UOUT der Starterschaltung 3 schnell an. Die Spannung am Knoten BI wird durch die Diode P4 auf etwa 0,6 V begrenzt. Die Schaltschwelle des Inverters INV2, bestehend aus den Transistoren P3 und N4, ist so eingestellt, dass bis zu einer Ausgangsspannung UOUT von etwa 1,5 V dies als eine logische 1 erkannt wird. Solange bleibt das Potential am Knoten SWOFF auf 0 V. Bei einer Ausgangsspannung UOUT größer als 1,5 V erkennt der Inverter INV2 die Spannung am Knoten BI aber als eine logische 0 und liefert eine logische 1 am Knoten SWOFF. Damit zieht der Transistor N3 den Knoten MAYO auf 0 und der Knoten PULG nimmt den logischen Wert 1 an, so dass der Transistor P1 abschaltet, das heißt nicht leitend wird. Durch die Last am Ausgang 3.3 der Starterschaltung 3 sinkt die Spannung wieder ab, bis der Inverter INV2 wieder zurück kippt. Die Ausgangsspannung UOUT der Starterschaltung 3 ist dadurch zwar mit einer gewissen Welligkeit behaftet, was für den Startvorgang aber keine Rolle spielt. Im Normalbetrieb werden dann alle Komponenten aus den geregelten Ausgangsspannungen VDD und VDDANA der Längsregler 1 und 2 versorgt. Dann wird auch die Starterschaltung 3 mit dem dessen Eingang 3.2 anliegenden Steuersignal S2 abgeschaltet. Dabei nimmt der Knoten STOPQ den logischen Zustand 0 an und der Transistor N5 verhindert einen Querstrom durch den Widerstand R2 und den als Diode arbeitenden Transistor P4. Der Transistor N2 zieht das Potenzial am Knoten MAYO nach unten, so dass der Knoten PULG auf die externe Spannung VDDEXT ansteigt und der Transistor P1 völlig abschaltet. Jetzt fließt über den Widerstand R1 zwar ein geringer Querstrom, ohne den Widerstand R1 aber wäre kein sicheres Anlaufen der Starterschaltung 3 gewährleistet.

### Bezugszeichenliste

- 1: digitaler Spannungsregler
- 1.1: Referenzspannungseingang
- 1.3: Spannungsreglerausgang
- 2: analoger Spannungsregler
- 2.1: Referenzspannungseingang
- 2.3: Spannungsreglerausgang
- 3: Starterschaltung
- 3.1: Versorgungsspannungseingang
- 3.2: Steuersignaleingang
- 3.3: Startspannungsausgang
- 4: Bandgap Referenzspannungsquelle
- 5: Regeloperationsverstärker
- 6: Ladungspumpe
- 7: N-MOS Transistor
- 8: erster Spannungsteilerwiderstand
- 9: zweiter Spannungsteilerwiderstand
- 10: Regeloperationsverstärker
- 11: Ladungspumpe
- 12: N-MOS Transistor
- 13: erster Spannungsteilerwiderstand
- 14: zweiter Spannungsteilerwiderstand
- 15: Versorgungsspannungsanschluss
- VDDEXT: externe Versorgungsspannung
- VDDANASTART: Startspannung
- VDDSTART: Startspannung
- VDD: Ausgangsspannung des Spannungsreglers für eine digitale Schaltung
- VDDANA: Ausgangsspannung des Spannungsreglers für eine Analogschaltung
- GND: Bezugspotential
- STOP: Deaktivierungssignal
- SW1: steuerbarer Schalter
- SW2: steuerbarer Schalter
- P1 - P5: P-Kanal MOSFET
- N1 - N6: N-Kanal MOSFET
- MAYO: Knoten
- SWOFF: Knoten
- PULG: Knoten
- STOPQ: Knoten
- UOUT: Starterspannung
- S1: Referenzspannung
- INV1: erster Inverter
- INV2: zweiter Inverter

## Patentansprüche

1. Schaltungsanordnung zur Spannungsregelung,
mit einem Längsregler (1), welcher einen Regelverstärker (5) und eine diesem nachgeschaltete Ladungspumpe (6) aufweist, mit einer Referenzspannungseinheit (4) zur Erzeugung einer Referenzspannung (S1) für den Regelverstärker (5), und zur Erzeugung eines Steuersignals (S2) mit einer Startereinheit (3) zur Erzeugung einer Starterspannung (UOUT), um den Regelverstärker (5), die Ladungspumpe (6) und die Referenzspannungseinheit (4) während des Startens des Längsreglers (1) mit Spannung zu versorgen, wobei die Ladungspumpe (6) bei Abgabe des Steuersignals (S2) durch ein vom Steuersignal (S2) gesteuertes Schaltmittel (SW1) von der Referenzspannungseinheit (4) und der Startereinheit (3) getrennt wird und somit die Zufuhr der Starterspannung (Uout) zur Ladungspumpe (6) unterbunden ist, und
die Ladungspumpe (6) über das steuerbare Schaltmittel (SW1) mit einer vom Längsregler (1) erzeugten Ausgangsspannung (VDD) verbunden wird.

2. Schaltungsanordnung nach Patentanspruch 1,
bei der der Längsregler (1) als Längsreglertransistor einen N-MOS Transistor (7) aufweist.

3. Schaltungsanordnung nach einem der Patentansprüche 1 oder 2,
mit einem weiteren Längsregler (2), dessen Versorgungsspannungsanschlüsse ebenfalls mit der Startereinheit (3) verbindbar sind.

4. Schaltungsanordnung nach Patentanspruch 3,
mit einem zweiten steuerbaren Schaltmittel (SW2), über das der Regelverstärker (5) mit einer vom weiteren Längsregler (2) erzeugten Ausgangsspannung (VDDANA) verbindbar ist.

5. Schaltungsanordnung nach einem der Patentansprüche 1 bis 4,
bei der die Referenzspannungseinheit (4) als Bandgap-Schaltung ausgebildet ist.

6. Schaltungsanordnung nach einem der Patentansprüche 1 bis 5,
bei der der Längsregler (1) und/oder der weitere Längsregler (2) als low drop Spannungsregler ausgebildet sind.

7. Schaltungsanordnung nach einem der Patentansprüche 1 bis
6, bei der die Startereinheit (3) einen Zweipunktregler (R2, P4, N5, P3, N4) aufweist.

8. Schaltungsanordnung nach Patentanspruch 7,
bei der der Zweipunktregler (R2, P4, N5, P3, N4) eingangsseitig einen Spannungsteiler mit einem Widerstand (R2) und einer Diode (P4) aufweist, über welche der Schaltpunkt des Zweipunktreglers (R2, P4, N5, P3, N4) einstellbar ist.

9. Schaltungsanordnung nach Patentanspruch 8,
bei der der Zweipunktregler (R2, P4, N5, P3, N4) einen mit dem Spannungsteiler verbundenen Inverter mit einem N-MOS Transistor (N4) und einem P-MOS Transistor (P3) aufweist.

10. Schaltungsanordnung nach Patentanspruch 9,
bei der der Schaltpunkt des Zweipunktreglers über die Kanallänge und Kanalbreite der zwei MOS Transistoren (P3, N4) einstellbar ist.

11. Schaltungsanordnung nach einem der Patentansprüche 1 bis 10,
bei der die Startereinheit (3) eine Deaktivierungskomponente (P5, N6, N2) aufweist, über welche die Startereinheit (3) deaktivierbar ist.

12. Schaltungsanordnung nach Patentanspruch 11,
bei der die Steuerung der Deaktivierungskomponente (P5, N6, N2) über die Referenzspannungseinheit (4) erfolgt.

13. Verwendung der Schaltungsanordnung nach einem der Patentansprüche 1 bis 12,
in einem integrierten Controllerbaustein.

14. Verfahren zum Betreiben eines Spannungsreglers, welcher einen Längsregler (1) mit einer einem Regelverstärker (5) nachgeschalteten Ladungspumpe (6) aufweist, bei dem während einer Startphase der Regelverstärker (5) und die Ladungspumpe (6) mit einer von einer Startereinheit (3) erzeugten Starterspannung (UOUT) versorgt werden,
bei dem, nachdem die Startphase beendet ist, in eine normale Betriebsphase umgeschaltet wird, indem mittels einer Umschalteinheit (SW1) die Ladungspumpe (6) von der Starterspannung (UOUT) der Startereinheit (3) abgeklemmt und mit einer vom Längsregler (1) erzeugten Ausgangsspannung (VDD) verbunden wird.

15. Verfahren nach Patentanspruch 14,
bei dem mittels einer Referenzspannungseinheit (4) die Starterspannung (UOUT) mit einer von der Referenzspannungseinheit (4) erzeugten Referenzspannung (S1) verglichen wird, und abhängig vom Ergebnis des Vergleichs die Umschalteinheit (SW1, SW2) angesteuert wird.

16. Verfahren nach einem der Patentansprüche 14 oder 15,
bei dem die Startereinheit (3) nach Beendigung der Startphase deaktiviert wird.

## Claims

1. Switching circuit arrangement for voltage regulation, comprising a line regulator (1), which comprises a regulating amplifier (5) and a charge pump (6) connected downstream thereto, having a reference voltage unit (4) for generating a reference voltage (S1) for the regulating amplifier (5) and for generating a control signal (S2), having a starter unit (3) for generating a starter voltage (UOUT) for supplying voltage to the regulating amplifier (5), the charge pump (6) and the reference voltage unit (4) during starting the line regulator (1), wherein in case of emitting the control signal (S2), the charge pump (6) is disconnected from the reference voltage unit (4) and the starter unit (3) by a switching means (SW1) controlled by the control signal (S2) und thus the supply of the starter voltage (Uout) to the charge pump (6) is prevented, and the charge pump (6) is connected by the controllable switching means (SW1) to an output voltage (VDD) generated by the line regulator (1).

2. Switching circuit arrangement according to patent claim 1,
wherein the line regulator (1) comprises an N-MOS transistor (7) as a line regulator transistor.

3. Switching circuit arrangement according to one of patent claims 1 or 2,
comprising a further line regulator (2), the supply voltage terminals of which are also connectable to the starter unit (3).

4. Switching circuit arrangement according to patent claim 3,
comprising a second controllable switching means (SW2), by which the regulating amplifier (5) is connectable to an output voltage (VDDANA) generated by the further line regulator (2).

5. Switching circuit arrangement according to one of patent claims 1 to 4,
wherein the reference voltage unit (4) is formed as a bandgap circuit.

6. Switching circuit arrangement according to one of patent claims 1 to 5,
wherein the line regulator (1) and/or the further line regulator (2) is formed as a low drop voltage regulator.

7. Switching circuit arrangement according to one of patent claims 1 to 6,
wherein the starter unit (3) comprises a two level controller (R2, P4, N5, P3, N4).

8. Switching circuit arrangement according to patent claim 7,
wherein the two level controller (R2, P4, N5, P3, N4) comprises at its input a voltage divider having a resistance (R2) and a diode (P4), by which the switching point of the two level controller (R2, P4, N5, P3, N4) is adjustable.

9. Switching circuit arrangement according to patent claim 8,
wherein the two level controller (R2, P4, N5, P3, N4) comprises an inverter connected to the voltage divider, having an N-MOS transistor (N4) and a P-MOS transistor (P3).

10. Switching circuit arrangement according to patent claim 9,
wherein the switching point of the two level controller is adjustable by the channel length and the channel width of the two transistors (P3, N4).

11. Switching circuit arrangement according to one of patent claims 1 to 10,
wherein the starter unit (3) comprises a deactivation component (P5, N6, N2), by which the starter unit (3) is deactivable.

12. Switching circuit arrangement according to patent claim 11,
wherein the control of the deactivation component (P5, N6, N2) is carried out by the reference voltage unit (4).

13. Usage of the switching circuit according to one of patent claims 1 to 12, in an integrated controller device.

14. Method for operating a voltage regulator,
which comprises a line regulator (1) having a charge pump (6) downstream connected to a regulating amplifier (5), wherein during a start phase the regulating amplifier (5) and the charge pump (6) are supplied with a starter voltage (UOUT) generated by a starter unit (3),
wherein, after the start phase has been completed, it is switched into a normal operating phase, by disconnecting the charge pump (6) from the starter voltage (UOUT) of the starter unit (3) by a switching unit (SW1) and by connecting the charge pump (6) to an output voltage (VDD) generated by the line regulator (1).

15. Method according to patent claim 14,
wherein the starter voltage (UOUT) is compared by a reference voltage unit (4) with a reference voltage (S1) generated by the reference voltage unit (4), and the switching unit (SW1, SW2) is accessed depending on the result of the comparison.

16. Method according to one of patent claims 14 or 15,
wherein the starter unit (3) is deactivated after completing the start phase.

## Revendications

1. Montage de régulation de la tension, comprenant un régulateur (1) longitudinal qui a un amplificateur (5) de régulation et une pompe (6) de charge montée en aval de celui-ci, comprenant une unité (4) de tension de référence pour la production d'une tension (S1) de référence pour l'amplificateur (5) de régulation, et, pour la production d'un signal (S2) de commande, comprenant une unité (3) d'amorçage pour la production d'une tension (UOUT) d'amorçage afin d'alimenter en tension l'amplificateur (5) de régulation, la pompe (6) de charge et l'unité (4) de tension de référence pendant l'amorçage du régulateur (1) longitudinal, la pompe (6) de charge étant, lors de l'émission du signal (S2) de commande, séparée de l'unité (4) de tension de référence et de l'unité (3) d'amorçage par un moyen (SW1) de commutation commandé par le signal (S2) de commande et l'application de la tension (UOUT) d'amorçage à la pompe (6) de charge étant ainsi interrompue et la pompe (6) de charge est reliée, par le moyen (SW1) de commutation pouvant être commandé, à une tension (VDD) de sortie produite par le régulateur (1) longitudinal.

2. Montage suivant la revendication 1, dans lequel le régulateur (1) longitudinal a un transistor (7) N-MOS comme transistor de régulateur longitudinal.

3. Montage suivant l'une des revendications 1 ou 2, comprenant un autre régulateur (2) longitudinal, dont les bornes de tension d'alimentation peuvent être reliées également à l'unité (3) d'amorçage.

4. Montage suivant la revendication 3, comprenant un deuxième moyen (SW2) de commutation pouvant être commandé, par lequel l'amplificateur (5) de régulation peut être relié à une tension (VDDANA) de sortie produite par l'autre régulateur (2) longitudinal.

5. Montage suivant l'une des revendications 1 à 4, dans lequel l'unité (4) de tension de référence est constituée sous la forme d'un circuit bandgap.

6. Montage suivant l'une des revendications 1 à 5, dans lequel le régulateur (1) longitudinal et/ou l'autre régulateur (2) longitudinal sont constitués sous la forme d'un régulateur de tension low drop.

7. Montage suivant l'une des revendications 1 à 6, dans lequel l'unité (3) d'amorçage a un régulateur (R2, P4, N5, P3, N4) à deux positions.

8. Montage suivant la revendication 7, dans lequel le régulateur (R2, P4, N5, P3, N4) à deux positions a du côté de l'entrée un diviseur de tension ayant une résistance (R2) et une diode (P4) par lesquelles le point de commutation du régulateur (R2, P4, N5, P3, N4) à deux positions est réglable.

9. Montage suivant la revendication 8, dans lequel le régulateur (R2, P4, N5, P3, N4) à deux positions a un inverseur relié au diviseur de tension et ayant un transistor (N4) N-MOS et un transistor (P3) P-MOS.

10. Montage suivant la revendication 9, dans lequel le point de commutation du régulateur à deux positions est réglable par la longueur de canal et par la largeur de canal des deux transistors (P3, N4) MOS.

11. Wagon de marchandises suivant l'une des revendications 1 à 10, dans lequel l'unité (3) d'amorçage a un composant (P5, N6, N2) de désactivation, par lequel l'unité (3) d'amorçage peut être désactivée.

12. Montage suivant la revendication 11, dans lequel la commande du composant (P5, N6, N2) de désactivation s'effectue par l'unité (4) de tension de référence.

13. Utilisation du montage suivant l'une des revendications 1 à 12, dans un module de contrôleur intégré.

14. Procédé pour faire fonctionner un régulateur de tension, qui a un régulateur (1) longitudinal ayant une pompe (6) de charge montée en aval d'un amplificateur (5) de régulation, dans lequel, pendant une phase d'amorçage, l'amplificateur (5) de régulation et la pompe (6) de charge sont alimentés en une tension (UOUT) d'amorçage produite par une unité (3) d'amorçage,
dans lequel, après que la phase d'amorçage est terminée, on passe dans une phase de fonctionnement normale en séparant au moyen d'une unité (SW1) de commutation la pompe (6) de charge de la tension (UOUT) d'amorçage de l'unité (3) d'amorçage et en lui appliquant une tension (VDD) de sortie produite par le régulateur (1) longitudinal.

15. Procédé suivant la revendication 14, dans lequel on compare, au moyen d'une unité (4) de tension de référence, la tension (UOUT) d'amorçage à une tension (S1) de référence produite par l'unité (4) de tension de référence et on commande l'unité (SW1, SW2) de commutation en fonction du résultat de la comparaison.

16. Procédé suivant l'une des revendications 14 ou 15, dans lequel on désactive l'unité (3) d'amorçage après que la phase d'amorçage est terminée.
